# EUROPEAN PATENT APPLICATION

(11) **EP 1 055 902 A1**
(43) Date of publication of application: **29.11.2000**
(21) Application number: 99973429.6
(22) Date of filing: 06.12.1999
(51) Int. Cl.: G01B 11/00, G02B 6/255, G09G 5/00, H04N 7/18

(54) **IMAGE PROCESSOR FOR OBSERVING OPTICAL FIBER AND OPTICAL FIBER FUSION-CONNECTING DEVICE**

(30) Priority: 14.12.1998 JP 35488798; 21.12.1998 JP 36340598
(71) Applicant: The Furukawa Electric Co., Ltd., Tokyo 100-8322 (JP)
(72) Inventor: KOJIMA, Hidekazu The Furukawa Electric Co., Ltd., Tokyo 100-8322 (JP); UCHIDA, Takaaki The Furukawa Electric Co., Ltd., Tokyo 100-8322 (JP)
(74) Representative: Freed, Arthur Woolf
(86) International application number: JP9906818
(87) International publication number: WO0036366

(57) **Abstract**

The present invention provides an image processor for observing an optical fiber, in which information regarding optical fibers obtained by an image photo-taken by a television camera and by processing such an image can be outputted to a television monitor, the image processor being characterized in that an image obtained by rotating the image from the television camera by 90° and an image obtained by not rotating the image from the television camera can be switched and be outputted to the television monitor.

The present invention further provides an optical fiber fusion-splicer comprising a main body including a fusion-splicing mechanism for fusion-splicing two optical fibers, and the above-mentioned image processor for observing an optical fiber, and wherein orientation of the television monitor of the image processor can freely be changed with respect to the main body and the television monitor has a reverse display function.

## Description

### BACKGROUND OF THE INVENTION

### Field of the Invention

The present invention relates to an image processor for processing an image photo-taken by a television camera, and more particularly, it relates to an image processor for observing an optical fiber, in which optical fibers spliced by an optical fiber fusion-splicer device are photo-taken by a television camera and is displayed on a television monitor, and information regarding the optical fibers is detected from an image, the optical fibers are shifted on the basis of such information to automatically align the optical fibers with each other, and the optical fibers displayed on the television monitor can easily be observed. The present invention also relates to an optical fiber fusion-splicer for fusion-splicing two optical fibers.

### Description of the Related Art

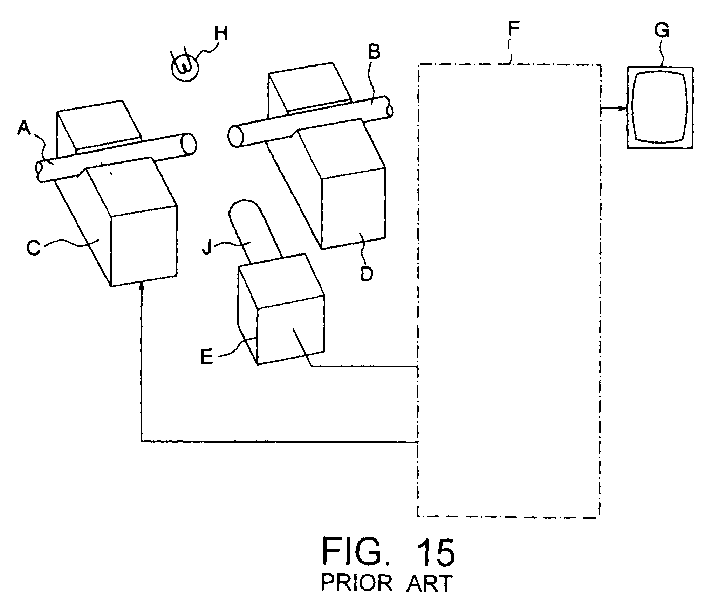

Among optical fiber fusion-splicers, there is an optical fiber fusion-splicer in which ends of two optical fibers to be spliced are photo-taken by a television camera, and the photo-taken image is processed by an image processor to detect optical axes of the respective optical fibers, and one or both of the optical fibers are shifted on the basis of a signals from the image processor to automatically position the optical axes of two optical fibers. An example of such an optical fiber fusion-splicer is shown in Fig. 15. As shown in Fig. 15, the optical fiber fusion-splicer comprises positioning bases C, D on which two optical fibers A, B are independently set, a television camera E for imaging or photo-taking the optical fibers A, B set on the positioning bases C, D, and an image processor F for processing an image from the television camera E. One (C) of the positioning bases C, D is automatic-controlled on the basis of a signal from the image processor F to be shifted. Further, a television monitor G for observing the image of the optical fibers A, B photo-taken is connected to the image processor F so that the optical fibers A, B can be observed by the television monitor G. Incidentally, as shown in Fig. 15, a light source H for illuminating the optical fibers A, B is disposed in a confronting relationship to the television camera E with the interposition of the positioning bases C, D, and a microscope J for enlarging and imaging portions of two optical fibers A, B to be butt-spliced is attached to an end of the television camera E.

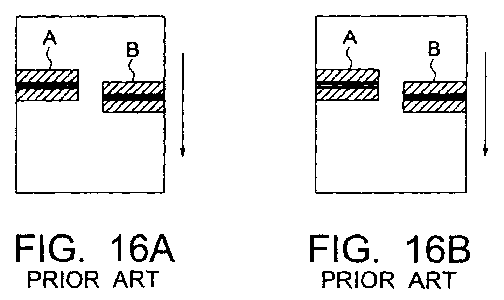

In the optical fiber fusion-splicer shown in Fig. 15, the television camera E is set to orient a high resolution direction, i.e., scanning direction of the television camera E to a direction perpendicular to the optical axes of the optical fibers A, B in order to improve a resolution in a deviation direction of the optical fibers A, B and to permit high accurate alignment as shown in Fig. 16A, and further, the television monitor G is set in a 90° rotated position (in a vertical position) in order to coincide the images of the optical fibers A, B displayed on the television monitor G with the photo-taken image thereby to avoid visual confusion as shown in Fig. 16B.

However, the optical fiber fusion-splicer shown in Fig. 15 arose the following problems.
(1) Since the television monitor set in the 90° rotated position (vertical position) is not coincided with the human's visual field, queer feeling is given to the operator, which results in fatigue.
(2) Regarding the information for text and graphics which can be displayed on the television monitor G, when the television monitor G is rotated by 90° , since the display area in a left-and-right direction is narrowed, the number of characters per one line which can be displayed is decreased, and, thus, the number of lines for displaying the same sentence is increased.
(3) As is well-known, a television monitor G of aperture grill tube type has a curved surface in a lateral direction and a planar surface in a longitudinal direction so that an easy visible picture plane is provided in a normal installation because light from a fluorescent lamp is not almost reflected. However, if this monitor is used in a 90° rotated condition, the advantage thereof will be lost.
(4) In recent display devices such as liquid crystal displays and plasma displays, a visual angle range is given to align with a visual field by a physical property of the element and a non-reflection filter or a coating layer externally mounted. However, if the monitor is rotated by 90° , the advantage thereof will be lost.
(5) The above-mentioned problems lead to reduction of working efficiency, thereby delaying work for an optical fiber network which mainly plays a fundamental role in the communication network.

Further, among the optical fiber fusion-splicers, there is an optical fiber fusion-splicer in which the television monitor shown in Fig. 15 is integrally provided on a main body including a fusion-splicing mechanism. However, such an optical fiber fusion-splicer arose the following problems.
(1) Since the television monitor as an observing mechanism is secured to the main body or an angle of depression thereof can be changed only by a small angle, if the sunlight or illumination light is coincided with the visual angle (visual field angle) of the television monitor, the picture plane of the television monitor will be hard to be observed. This is also true even when a reflection preventing filter is mounted on the television monitor or when non-grea treatment is applied to the television monitor.
(2) In many cases, since the optical fiber fusion-splicing operation is effected in a narrow place or a place where there are many obstacles, such as on a post or within a manhole, it is frequently difficult to install the optical fiber fusion-splicer in such a manner that the television monitor is set in a confronting relationship to the operator, with the result that the picture plane of the television monitor is hard to be observed, thereby making the operation difficult.
(3) In case of the above (2), although it is considered that the television monitor is made possible to separate from other parts, in such a case, since the optical fiber fusion-splicer is divided into the television monitor and other parts, the device will be hard to be handled on the post or within the manhole.

### SUMMARY OF THE INVENTION

A first object of the present invention is to provide an image processor for observing an optical fiber, which can solve the problems of the conventional optical fiber fusion-splicer shown in Fig. 15 by switching and outputting an image (from a television camera) rotated by 90° and an image (from the television camera) not rotated by 90° and which has high degree of freedom for constructing a picture plane of the television camera.

A second object of the present invention is to provide an optical fiber fusion-splicer having an image processor for observing an optical fiber, which is brought to a single equipment and which can give a most conspicuous observing (monitoring) image to the operator regardless of the installation condition of the apparatus.

According to a first aspect of the present invention, there is provided an image processor for observing an optical fiber, in which information regarding optical fibers obtained by an image photo-taken by a television camera and by processing such an image can be outputted to a television monitor, the image processor being characterized in that an image obtained by rotating the image from the television camera by 90° and an image obtained by not rotating the image from the television camera can be switched and be outputted to the television monitor.

According to a second aspect of the present invention, there is provided an image processor for observing an optical fiber, wherein an image processing portion includes a scan converting portion capable of switching and outputting the image obtained by rotating the image from the television camera by 90° and the image obtained by not rotating the image from the television camera.

According to a third aspect of the present invention, there is provided an image processor for observing an optical fiber, wherein the scan converting portion includes a scan converting image memory portion for storing the inputted image, and further wherein, by converting data read/write address in the scan converting image memory portion, the image rotated by 90° and the image not rotated by 90° are read from the scan converting image memory portion and are outputted.

According to a fourth aspect of the present invention, there is provided an image processor for observing an optical fiber, wherein the scan converting portion includes an information processing processor such as a digital signal processor, and software program describing an information processing sequence of the information processing processor, and the information processing processor can rotate the image inputted to the scan converting portion by 90° and output it.

According to a fifth aspect of the present invention, there is provided an image processor for observing an optical fiber, wherein the scan converting portion has a function for altering one or more of longitudinal magnification, lateral magnification, a longitudinal offset amount and a lateral offset amount of the image.

According to a sixth aspect of the present invention, there is provided an image processor for observing an optical fiber, wherein a signal obtained by combining desired information with the image photo-taken by the television camera can be outputted to the television monitor.

According to a seventh aspect of the present invention, there is provided an image processor for observing an optical fiber, wherein image signals from two or more television cameras can be inputted, and the image signals from the respective television cameras can be combined on a single television monitor or be switched to be outputted to the television monitor.

According to an eighth aspect of the present invention, there is provided an optical fiber fusion-splicer, comprising a main body including a fusion-splicing mechanism for fusion-splicing two optical fibers and the above-mentioned image processor for observing an optical fiber, and wherein orientation of the television monitor of the image processor can freely be changed with respect to the main body and the television monitor has a reverse display function.

According to a ninth aspect of the present invention, there is provided an optical fiber fusion-splicer, wherein a picture plane of the television monitor can be changed manually or automatically in accordance with the orientation of the television monitor.

### BRIEF DESCRIPTION OF THE DRAWINGS

Fig. 1 is an explanatory view schematically showing an optical fiber fusion-splicer using an image processor for observing an optical fiber according to the present invention;
Fig. 2 is an explanatory view showing an example of a picture plane of a television monitor;
Fig. 3 is an explanatory view showing an image processor for observing an optical fiber according to a first embodiment of the present invention;
Fig. 4 is an explanatory view showing a circuit arrangement of a scan converting portion;
Fig. 5 is an explanatory view showing constructions of a writing address counter and a reading address counter;
Fig. 6 is an explanatory view showing an example of a picture plane of the television monitor;
Fig. 7 is an explanatory view showing an example of a picture plane of the television monitor;
Fig. 8 is an explanatory view showing an image processor for observing an optical fiber according to a second embodiment of the present invention;
Fig. 9 is an explanatory view showing a circuit arrangement of a scan converting portion in the image processor for observing an optical fiber shown in Fig. 8;
Fig. 10 is an explanatory view showing another circuit arrangement of the scan converting portion;
Fig. 11 is an explanatory view showing a further circuit arrangement of the scan converting portion;
Fig. 12 is an explanatory view showing an image processor for observing an optical fiber according to a third embodiment of the present invention;
Fig. 13 is an explanatory view showing an example of a picture plane of a television monitor;
Fig. 14 is an explanatory view showing an example of a picture plane of the television monitor;
Fig. 15 is an explanatory view schematically showing a conventional image processor for observing an optical fiber;
Fig. 16A is an explanatory view showing an image photo-taken by a television camera in the image processor for observing an optical fiber shown in Fig. 15, and Fig. 16B is an explanatory view showing an image displayed on the television monitor in the image processor for observing an optical fiber shown in Fig. 15;
Fig. 17 is an explanatory view schematically showing an optical fiber fusion-splicer according to the present invention;
Fig. 18 is an explanatory view showing an attachment condition of a television monitor;
Fig. 19 is an explanatory view showing examples of picture planes of the television monitor, where Fig. 19A shows an erected image of a non-scan converted image, Fig. 19B shows a vertically inverted image, Fig. 19C shows a laterally inverted image, and Fig. 19D shows a vertically and laterally inverted image;
Fig. 20 is an explanatory view showing examples of picture planes of the television monitor, where Fig. 20A shows an erected image of a scan converted image, Fig. 20B shows a vertically inverted image, Fig. 20C shows a laterally inverted image, and Fig. 20D shows a vertically and laterally inverted image;
Fig. 21 is an explanatory view showing a construction of an LCD panel as an example of the television monitor;
Fig. 22 is a block diagram showing a controlling method for the LCD panel; and
Fig. 23 is an explanatory view showing construction of display control when the LCD panel is used as the television monitor.

### BEST MODES FOR CARRYING OUT THE INVENTION.

### (First embodiment)

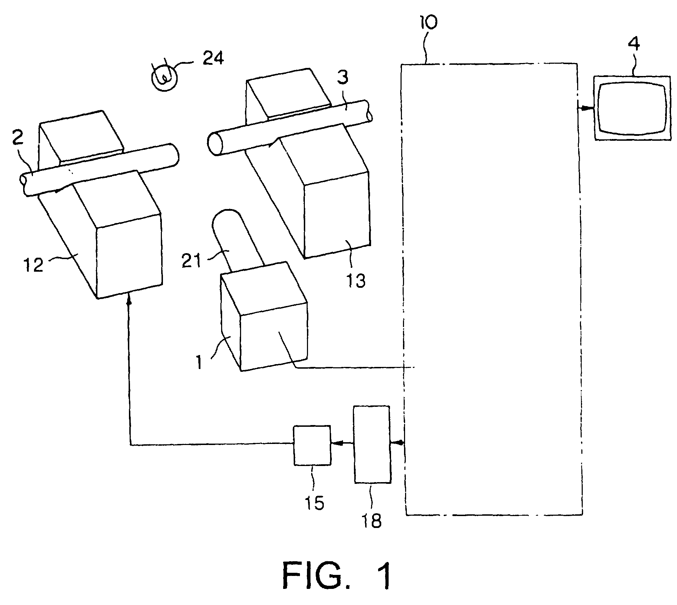

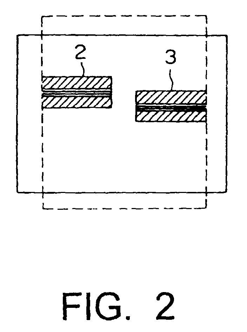

A first embodiment of an image processor for observing an optical fiber according to the present invention will be fully explained with reference to Figs. 1 to 7. Fig. 1 schematically shows an optical fiber fusion-splicer using the image processor for observing an optical fiber according to the present invention. In Fig. 1, a television camera 1 serves to output an analogue video signal, a television monitor 4 serves to input an analogue video signal, and these analogue video signals are inputted/outputted with respect to the image processor 10 for observing an optical fiber according to the present invention. Further, as shown in Fig. 1, optical fibers 2, 3 are set on positioning bases 12, 13, respectively, and the optical fibers 2, 3 are aligned or positioned by driving one (12) of the positioning bases 12, 13 by means of a motor 15. Incidentally, the motor 15 is controlled by a drive controlling device 18 on the basis of a signal from the image processor 10 for observing an optical fiber according to the present invention. Further, the television camera 1 is set at a position where it can photo-take portions of two optical fibers 2, 3 to be butt-spliced in such a manner that it is oriented to a high resolution direction of the television camera 1, i.e., oriented so that optical axes of the optical fibers 2, 3 are in perpendicular to the scanning line, so that the photo-taking visual field becomes elongate in a vertical direction, as shown by the broken line in Fig. 2. Incidentally, as shown in Fig. 1, a microscope 21 is attached to an end of the television camera 1 in order to enlarge and photo-take the portions of the optical fibers 2, 3 to be butt-spliced, and a light source 24 is disposed in a confronting relationship to the television camera 1 with the interposition of the optical fibers 2, 3. Further, the television camera 1 and the television monitor 4 are operated in response to an external synchronous signal, and in this case, they are operated in response to a synchronous signal generated by the image processor 10 for observing an optical fiber according to the present invention.

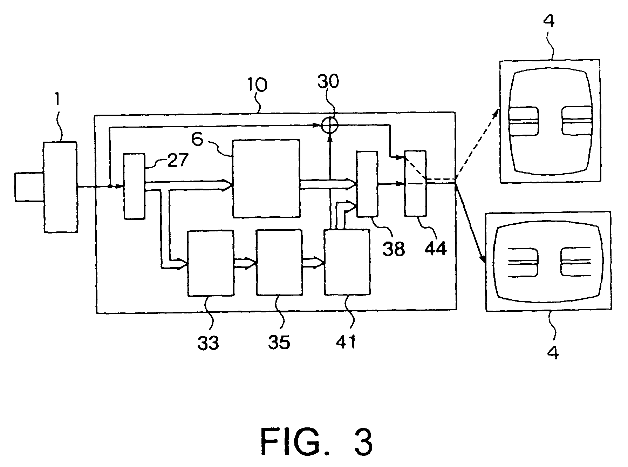

As shown in Fig. 3, the image processor 10 for observing an optical fiber according to the present invention comprises an A/D converter 27, a combining circuit 30, a data memory 33, a scan converting portion 6, a calculator 35, an encoder 38, a graphic circuit 41 and a video switch 44, and a video signal from the television camera 1 is divided and inputted to the A/D converted 27 and the combining circuit 30, respectively. The combining circuit 30 serves to combine a graphic signal sent from the graphic circuit 41 with the inputted video signal, thereby forming an image (non-scan converted image) in which information such as calculated result of the calculator 35 or operation instruction is overlay-displayed on the image of the television camera 1. On the other hand, the A/D converter 27 serves to digitalize the inputted video signal as a digital signal which is in turn inputted to the data memory 33 and the scan converting portion 6, respectively. The scan converting portion 6 to which the digitalized video signal was inputted serves to rotate the video signal by 90° and then to input it to the encoder 38. The encoder 38 serves to combine the graphic signal sent from the graphic circuit 41 with the inputted video signal, thereby forming an image (scan converted image) in which the information such as calculated result of the calculator 35 or operation instruction is overlay-displayed on the image (of the television camera 1) rotated by 90° . The video switch 44 serves to switch and output the non-scan converted image and the scan converted image to the television monitor 4. Now, various elements will be fully described.

The data memory 33 is a video memory for storing the image and has memory capacity capable of storing an image corresponding to at least one picture plane. A new image is stored in the data memory 33 every 1/30 second, thereby effecting renewal.

The calculator 35 serves to process the image stored in the data memory 33 and to output signals to the drive controlling device 18 (Fig. 1) and the graphic circuit 41. Although the processing contents in the calculator 35 will not be fully described here, whenever the image is renewed in the data memory 33, the image is read out and is image-processed, and information regarding deviation between the optical axes of the optical fibers 2, 3 and the like is calculated from the processed image, and such information is outputted to the drive controlling device 18. Based on such signal, the drive controlling device 18 serves to drive the motor 15 to shift the positioning base 12 and to repeat such shifting and the image processing by several times, with the result that the optical axes of the optical fibers 2, 3 set on the positioning bases 12, 13 are gradually aligned with each other.

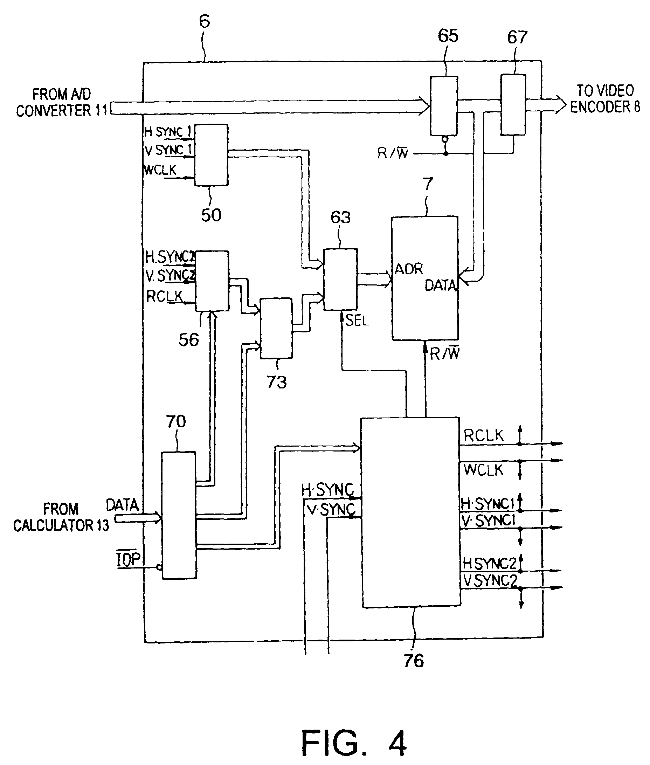

The scan converting portion 6 has a circuit arrangement as shown in Fig. 4 and has a scan converting image memory portion (referred to as "memory" hereinafter) 7 having a capacity capable of storing the video signal A/D-converted by the A/D converter 27 by at least one picture plane and further includes various circuits for controlling the writing of the image in the memory 7 and the reading-out of the image from the memory 7. Now, the writing of the image (image data) in the memory 7 and the reading-out of the image data from the memory 7 will be explained.

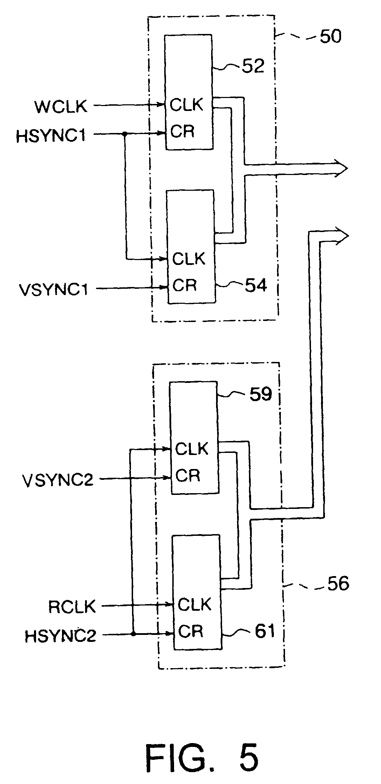

The writing address counter 50 shown in Fig. 4 generates writing address of the image data in the memory 7 by using synchronous signals HSYNC1 (horizontal synchronous signal) and VSYNC1 (vertical synchronous signal) used for controlling the television camera 1. More specifically, as shown in Fig. 5, the counter has a first counter 52 for generating lower address to the memory 7 and a second counter 54 generating upper address. The first counter 52 for generating the lower address is cleared by the signal HSYNC1 and serves to indicate a horizontal co-ordinate by counting WCLK (data writing signals), and the second counter 54 for generating the upper address is cleared by the signal VSYNC1 and serves to indicate a vertical co-ordinate by counting the signals HSYNC1.

The reading address counter 56 shown in Fig. 4 generates reading address of the image data from the memory 7 by using synchronous signals HSYNC2 (horizontal synchronous signal) and VSYNC2 (vertical synchronous signal) used for controlling the television monitor 4. More specifically, as shown in Fig. 5, the counter has a third counter 59 for generating lower address to the memory 7 and a fourth counter 61 generating upper address. The third counter 59 for generating the lower address is cleared by the signal VSYNC2 and serves to indicate a vertical co-ordinate by counting the signals HSYNC2, and the fourth counter 61 for generating the upper address is cleared by the signal HSYNC2 and serves to indicate a horizontal co-ordinate by counting RCLK (data reading signals). Incidentally, the various signals are generated from a synchronous signal generating circuit (not shown).

The writing address and the reading address generated in this way are switched by a selector 63 shown in Fig. 4 and are given to the memory 7. More specifically, upon writing the image data, the data is inputted to the memory 7 through a writing data buffer 65 shown in Fig. 4, and, upon reading the image data, the data is outputted from the memory 7 and is outputted a video encoder 8 through a reading data buffer 67 shown in Fig. 4. As a result, the co-ordinate conversion of 90 degrees is effected, with the result that the image (from the television camera 1) rotated by 90° can be outputted to the television monitor 4.

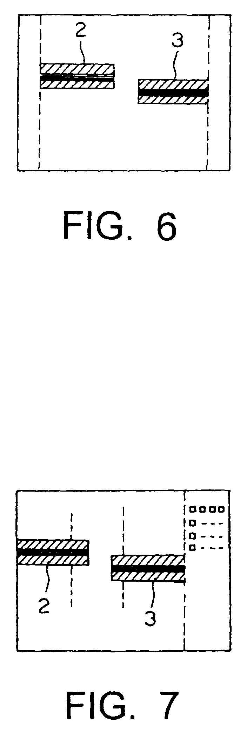

As shown in Fig. 4, the scan converting portion 6 is provided with a data latch 70. The data latch 70 serves to output a signal to the reading address counter 56 on the basis of image magnification setting information stored therein and to read out the image from the memory 7 with any magnification by changing the data reading address of the counter 56. Consequently, for example, as shown in Fig. 6, the video-capturing visual field (shown by the broken line) of the television camera 1 is reduced to the display picture plane (shown by the solid line) of the television monitor 4 to permit the display of the entire field. Further, the data latch 70 serves to output a signal to an adder 73 (Fig. 4) on the basis of image offset setting information stored therein and to read out a voluntarily offset data from the memory 7 by adding an offset value corresponding to the image offset setting information to the address from the reading address counter 56. As a result, for example, as shown in Fig. 7, the video-capturing visual field (shown by the broken line) of the television camera 1 can be offset to a left part of the display picture plane (shown by the solid line) of the television monitor 4 and be displayed there. Incidentally, the inputting of the image magnification setting information and the image offset setting information stored in the data latch 70 can be effected by inputting the data from an input device (not shown) such as an operation button or a keyboard to the adder 73. Further, in Fig. 4, the reference numeral 76 denotes an RW (read/write) control circuit. The RW control circuit 76 serves to generate various signals required for controlling the scan converting portion 6 on the basis of synchronous signals HSYNC and VSYNC from a synchronous signal generator (not shown) and the setting informations stored in the data latch 70. In this case, the video signal data reading signal RCLK, writing signal WCLK, synchronous signals HSYNC1, VSYNC1 for the television camera 1, synchronous signals HSYNC2, VSYNC2 for the television monitor 4, memory address switching signal SEL, and read/write switching signal R/W for the memory are generated. The reading and writing with respect to the memory are effected once, respectively, within one pixel unit time. By the signal outputted from the RW control circuit 76, the image data from the television camera 1 is transferred to the memory 7 through the writing data buffer 65, and the image data to be displayed on the television monitor 4 is read out from the memory 7 through the reading data buffer 67. The timings of the reading/writing in the writing data buffer 65 and the reading data buffer 67 are controlled by the read/write switching signal R/W, respectively.

In the graphic circuit 41 shown in Fig. 3, information such as image processing progressing information or image processed result information is outputted from the calculator 35 in Fig. 3 as data, the text (characters) or graphics (figure) is formed on the basis of such data, and such text or graphics is outputted to the encoder 38 or/and the combining circuit 30 as a video signal. For example, information indicating contents or condition of the image processing and graphic information indicating measuring lines of the optical fibers 2, 3 are outputted to the encoder 38 or/and the combining circuit 30.

The encoder 38 shown in Fig. 3 serves to combine another video signal with the video signal outputted from the scan converting portion 6 to output a single video signal. In this case, the video signal generated in the graphic circuit 41 can be combined with the image outputted from the scan converting portion 6. In this way, the image (scan converted image) in which various character or figure information is overlay-displayed on the image (of the television camera 1) rotated by 90° can be formed mainly by the scan converting portion 6, encoder 38 and graphic circuit 41 and such image can be displayed on the television monitor 4.

The combining circuit 30 shown in Fig. 3 serves to combine the video signal generated by the graphic circuit 41 with the video signal from the television camera 1 and to output the combined result to the television monitor 4. The video signal generated by the graphic circuit 41 is the same as the above. In this way, the image (non-scan converted image) in which various character or figure information is overlay-displayed on the image of the television camera 1 (not rotated by 90 ° ) can be formed mainly by the combining circuit 30 and the graphic circuit 41 and such image can be displayed on the television monitor 4.

The video switch 44 shown in Fig. 3 serves to switch the scan converted image and the non-scan converted image formed as mentioned above and to display the switched image on the television monitor 4. The operator can appropriately switch the scan converted image and the non-scan converted image to display the selected image on the television monitor 4 by switching the video switch 44.

### (Second embodiment)

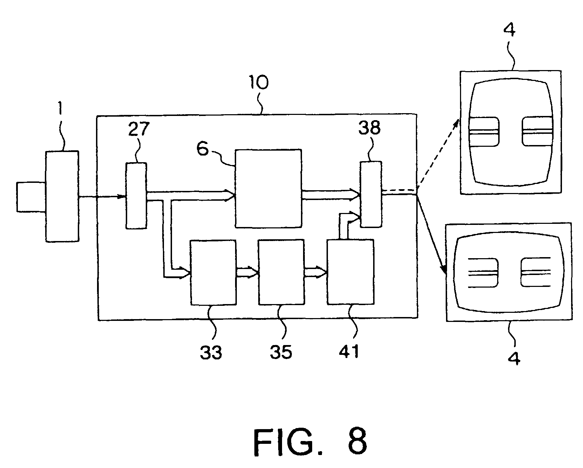

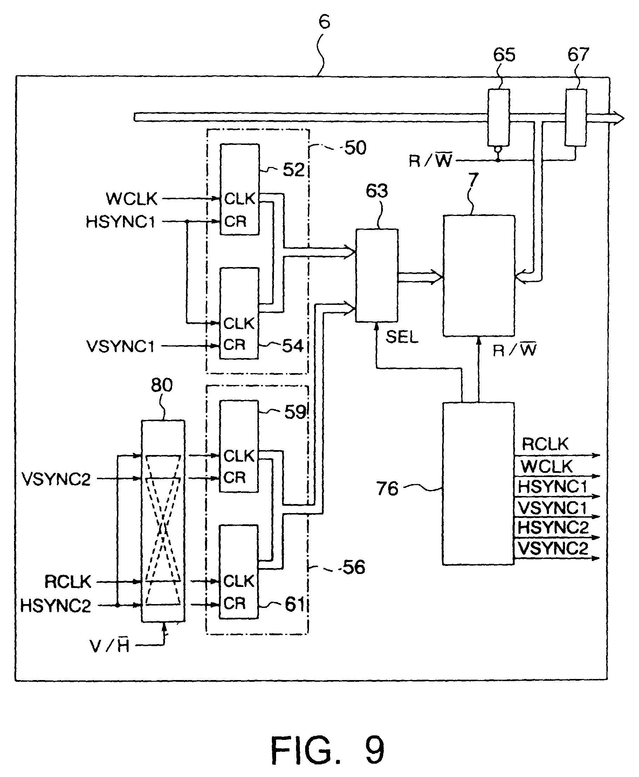

A second embodiment of an image processor for observing an optical fiber according to the present invention will be explained with reference to Fig. 8. In the image processor shown in Fig. 8, by designing a scan converting portion 6 in such a manner that it can output both the the image (of the television camera 1) rotated by 90° and the image not rotated by 90° , a circuit corresponding to the combining circuit 30 shown in Fig. 3 is omitted. More specifically, as shown in Fig. 9, a scan converting portion 6 same as the scan converting portion 6 shown in Figs. 4 and 5 is provided with a control line switching device 80 capable of switching between a case where the address of the reading address counter 56 is rotated by 90° and a case where such address is not rotated by 90° . That is to say, when the signals HSYNC2 and VSYNC2 are given to the third counter 59 of the reading address counter 56, the vertical co-ordinate is indicated, and, when the signals RCLK and HSYNC2 are given, the horizontal co-ordinate is indicated. On the other hand, when the signals RCLK and HSYNC2 are given to the fourth counter 61, the horizontal co-ordinate is indicated, and, when the signals HSYNC2 and VSYNC2 are given, the vertical co-ordinate is indicated. In any cases, as is in the first embodiment, the video signal generated by the graphic circuit 41 can be combined with the video signal outputted from the scan converting portion 6. Accordingly, by switching to the case where the address of the reading address counter 56 is rotated by 90° or the case where such address is not rotated by means of the control line switching device 80, the non-scan converted image and the scan converted image can be switched and the switched image can be displayed on the television monitor 4.

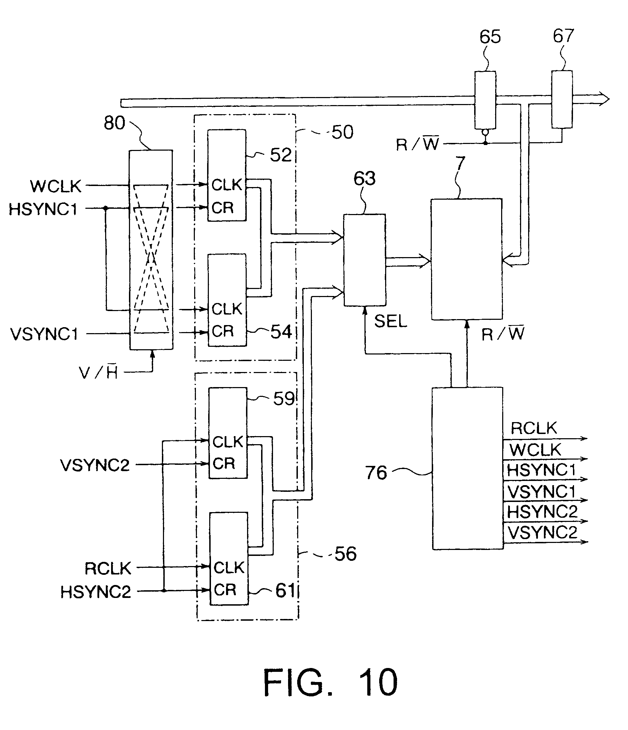

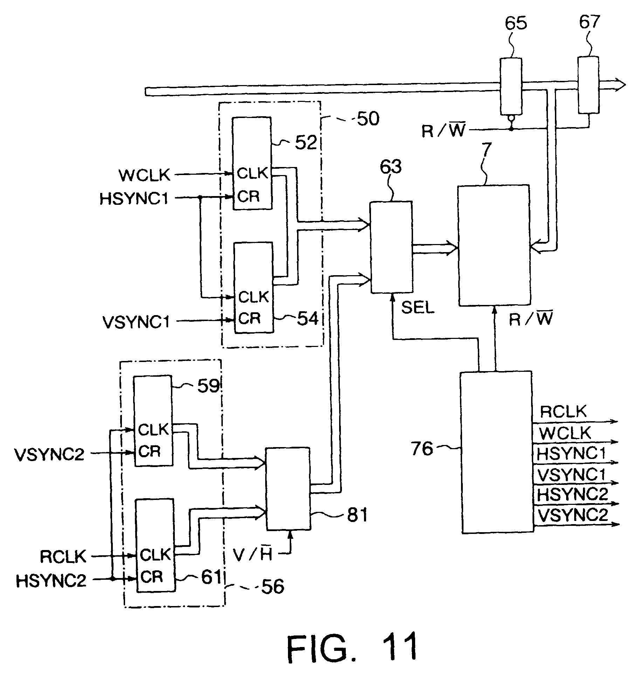

The same effect can be realized by providing the control line switching device 80 in association with the writing address counter 50, as shown in Fig. 10. Further, as shown in Fig. 11, in place of the control line switching device 80, a selector 81 may be provided behind the reading address counter 56 so that the same effect can be realized by switching the upper address and the lower address of the reading address counter. Further, the same effect can be realized by switching the upper address and the lower address of the writing address counter by means of a selector 8 (not shown).

### (Third embodiment)

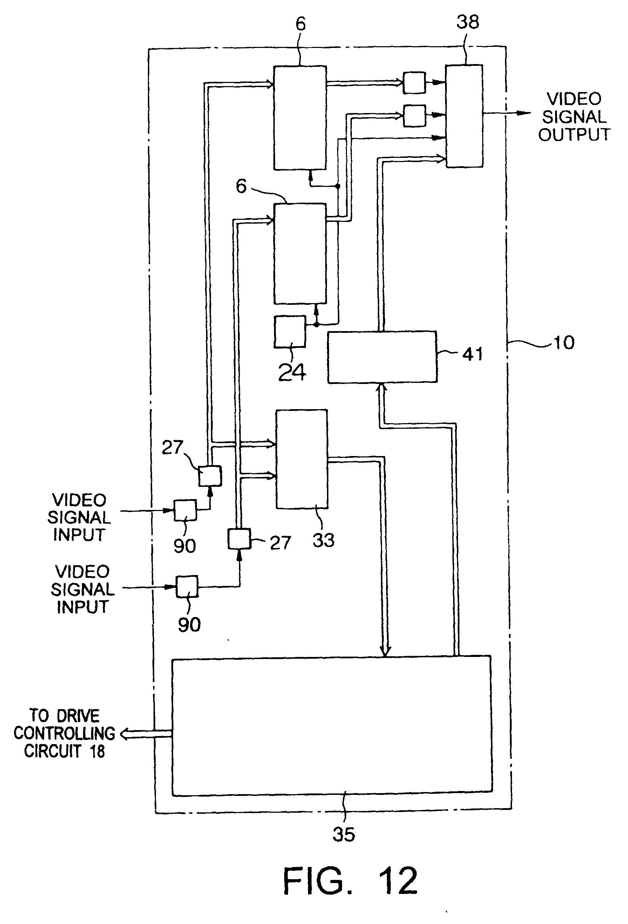

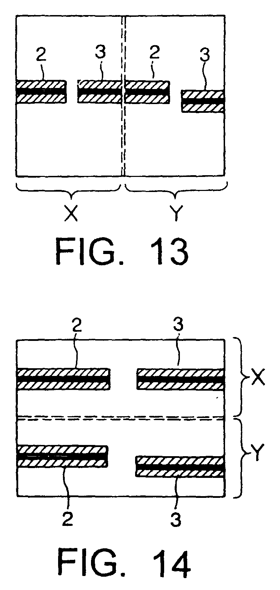

Fig. 12 shows a third embodiment of an image processor for observing an optical fiber according to the present invention. This embodiment is an example of a case where two television cameras 1 are interconnected and video signals outputted from these television cameras 1 can be outputted to a single television monitor 4. In this example, two signal input system for the television cameras 1 are provided and each system includes an input processing circuit 90 and an A/D converter 27. Video signals digitalized by the respective A/D converters 27 is stored in a data memory 33 capable of storing images corresponding to two picture planes, and the image is processed by a calculator 35 so that a signal required for controlling a drive controlling device 18 (Fig. 1) of an optical fiber fusion-splicer can be generated from the images photo-taken by two television cameras 1. Further, each of the two signal input systems is provided with a scam converting portion 6 capable of switching an image (from the television camera 1) rotated by 90° and an image not rotated. With this arrangement, as shown in Fig. 13, the images X, Y photo-taken by two television cameras 1 can be displayed on the single television monitor 4 side by side in a lateral direction or, as shown in Fig. 14, two images X, Y can be displayed side by side in a vertical direction.

### (Fourth embodiment)

The scan converting portion 6 in the image processor for observing an optical fiber according to the present invention can be constituted by a digital signal processor (information processing processor) and software program. The digital signal processor is a processor particularly suitable for processing information such as digitalized voice and/or image data, in which the inputted image can be rotated by 90° and size change and offset change of the image can be effected. In this case, by using the digital signal processor having high processing ability, the function of the graphic circuit 41 can be performed by the digital signal processor. Incidentally, the digital signal processor includes a memory required for processing the image.

The scan converting portion 6 may be arranged behind the encoder 38 so that, after the images are combined, 90° rotation, size adjustment and offset adjustment of the image can be effected. In this case, the text or graphics may be previously formed in the 90° rotated condition in the graphic circuit 41 and the text and graphics may be normally displayed when the image is rotated by 90° in the scan converting portion 6.

Other than the above,
(1) If the kind of the video signal of the television camera is different from that of the television monitor, for example, when the television camera outputs an NTSC signal and the television monitor requests a PAL signal, the scan converting portion can have a function for converting such signals. In the present days, the general video signal is of NTSC type, PAL type, SECAM type, VGA type or SVGA type.
(2) The television camera and the television monitor may request analogue signals or digital signals, or, one of the television camera and the television monitor may request digital signal and the other may request the analogue signal. The analogue video signal may be composite video, RGB video or S video, and the digital video signal may be RGB, YUV, YJK or JPEG.
(3) Also when the television camera and the television monitor are connected through a digital image interface (USB, IEEE1355, IEEE1394 or the like), the image processor according to the present invention or a processor including software may be disposed between the television camera and the television monitor.
(4) A camera tube or a solid-state image sensor may be used as the television camera, and a signal from such a tube or sensor may be inputted and processed.
(5) A Brownian tube, a liquid crystal display or a plasma display may be used as the television monitor, and a signal may be outputted to such a tube or display.
(6) In the above-mentioned embodiments, when the calculator has high processing ability, the data memory may be omitted.
(7) In the required resolution is low or if the image renewal speed is great, in place of the data memory, a field memory may be used so that the image can be renewed every 1/60 second. Incidentally, the field memory may have memory capacity of half of the memory capacity of the data memory.

### (Fifth embodiment)

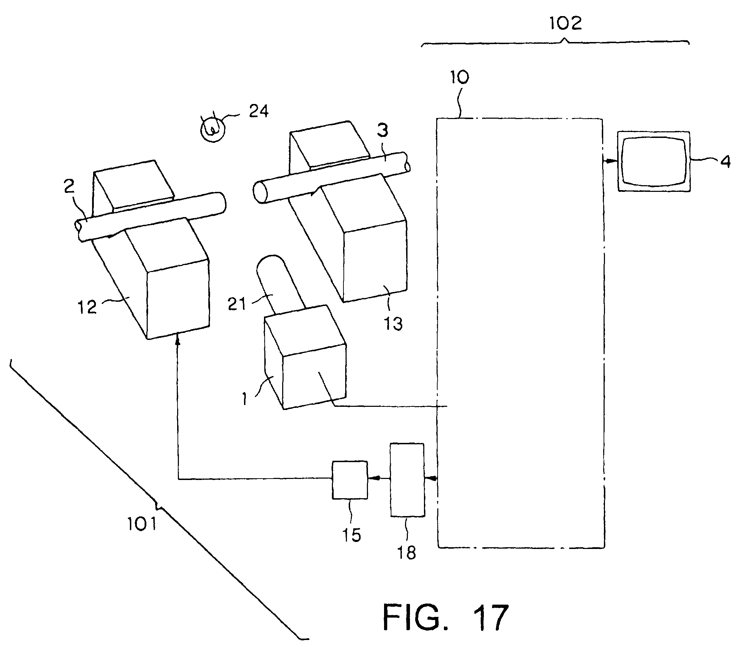

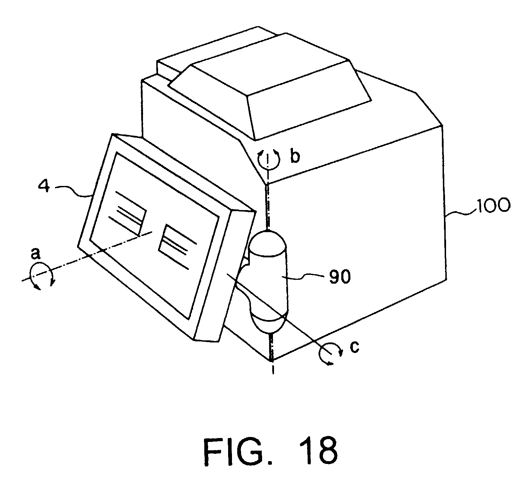

A first embodiment of an optical fiber fusion-splicer according to the present invention will be fully explained with reference to Fig. 17. Fig. 17 schematically shows the optical fiber fusion-splicer according to the present invention. The optical fiber fusion-splicer has a main body 100 (Fig. 18) including a fusion-splicing mechanism 101 for fusion-splicing two optical fibers 2, 3 and an observing mechanism 102 for observing two optical fibers 2, 3 to be fusion-spliced. The fusion-splicing mechanism 101 has positioning bases 12, 13 on which the optical fibers 2, 3 can be set, respectively, and one base 12 among the bases 12, 13 is driven by a motor 15 to automatically effect alignment of the optical fibers 2, 3. Incidentally, the motor 15 is controlled by a drive controlling device 18 on the basis of a signal from the image processor 10 for observing an optical fiber according to the present invention.

Further, the fusion-splicing mechanism 101 has a pair of discharge electrodes (not shown). These discharge electrodes are opposed to each other along a direction perpendicular to optical axes of the optical fibers 2, 3 set on the positioning bases 12, 13. When tip ends of the optical fibers 2, 3 are butted against each other by the positioning bases 12, 13, discharge heat is applied to the butted ends, with the result that the butted ends are fused and are fusion-spliced.

As shown in Fig. 17, the observing mechanism 102 comprises a television camera 1 capable of photo-taking the optical fibers 2, 3 set on the positioning bases 12, 13 of the fusion-splicing mechanism 101, the image processor 10 for observing an optical fiber according to the present invention, and a television monitor 4 for displaying a processed image outputted from the image processor 10. Among them, the television camera 1 and the image processor 10 for observing an optical fiber are the same as those shown in Fig. 3, which can process the image photo-taken by the television camera 1 and switch and output a scan converted image or a non-scan converted image to the television monitor 4.

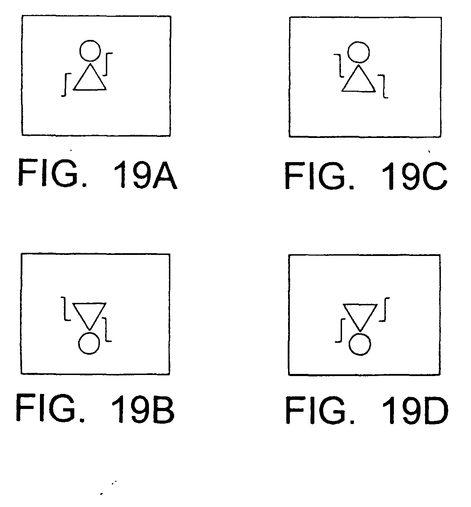

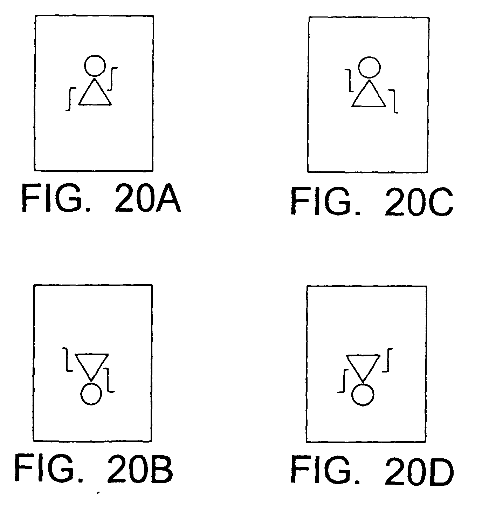

As shown in Fig. 18, the television monitor 4 is attached to the main body 100 in such a manner that orientation of the monitor can freely be changed with respect to the main body 100. More specifically, the television monitor 4 is attached to the main body 100 via an arm or bracket 90 for rotational movement in directions shown by the arrows a, b, c in Fig. 18. Further, the television monitor 4 has a reverse display function so that the image outputted from the image processor 10 can be displayed in a vertically, laterally or vertically/laterally reversed condition. Thus, in accordance with the orientation of the television monitor 4, among the non-scan converted image and the scan converted image outputted from the image processor 10 (erected images; Figs. 19A and Fig. 20A), images (Figs. 19B and 20B) obtained by reversing the non-scan converted image and the scan converted image vertically, images (Figs. 19C and 20C) obtained by reversing the non-scan converted image and the scan converted image laterally, and images (Figs. 19D and 20D) obtained by reversing the non-scan converted image and the scan converted image vertically and laterally (eight in total), any optimum image can be selected and displayed. Incidentally, in Figs. 19A to 19D and Figs. 20A to 20D, in order to facilitate the understanding of the reversed conditions, in place of the optical fibers 2, 3, a doll is displayed on the television monitor 4.

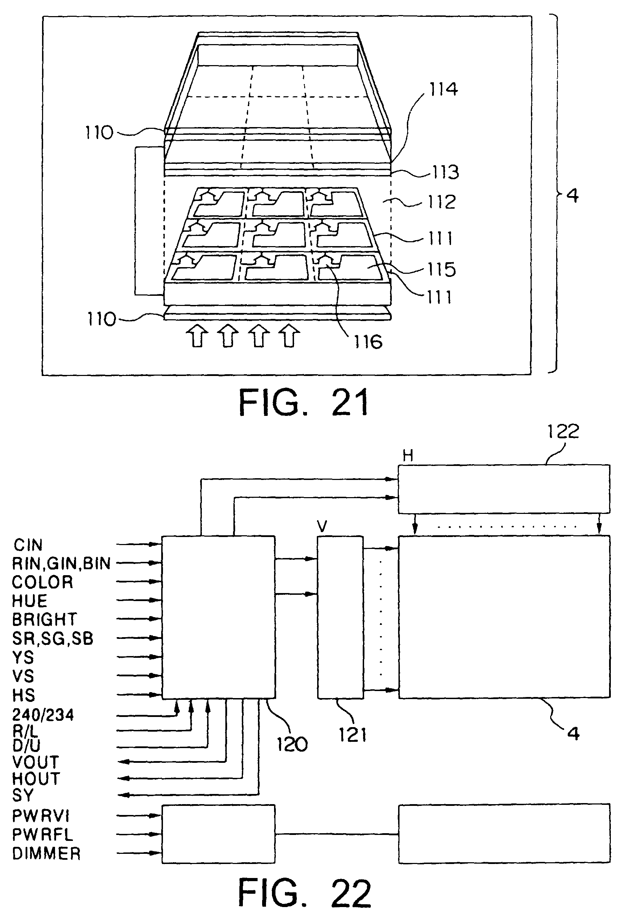

In the illustrated embodiment, an LCD panel (liquid crystal display panel) is used as the television monitor 4. As shown in Fig. 21, in the LCD panel 4, between upper and lower polarization plates 110, there are provided a plurality of cells 111 arranged in a matrix pattern, a liquid crystal 112, a common electrode 113 and a color filter 114. In this arrangement, by applying voltage to an element 116 (TFT in Fig. 21) for controlling a drive electrode 115 of the desired cell 111 while illuminating white light from below the lower polarization plate 110, the image is displayed. The selection or designation of the cell is controlled by a signal control substrate 120 shown in Fig. 22. More specifically, in accordance with instruction from the signal control substrate 120, a V driver 121 and an H driver 122 are driven to specify or designate one cell 111. Although plural signals are inputted to the signal control substrate 120, among them, a portion of the panel 4 from which the scanning is started is determined by R/L and D/U.

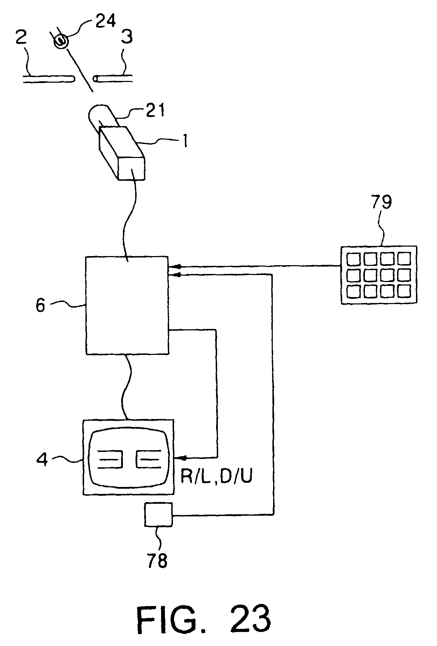

Further, in the illustrated embodiment, as shown in Fig. 23, an inclination switch 78 is provided on the LCD panel 4 so that, when the orientation of the panel 4 is inputted to the image processor 10, the image processor 10 sets the direction of the scanning of the scan converting portion 6 and sets the R/L, D/U signals for the panel 4. Further, on the basis of the input from an operation switch 79, the image processor 10 also sets the direction of the scanning of the scan converting portion 6 and sets the R/L, D/U signals for the panel 4. With this arrangement, always in accordance with the orientation of the panel 4, the optimum image selected from the above-mentioned eight images can automatically be displayed, and any image can also be displayed manually.

### Industrial Availability

The image processor for observing an optical fiber according to a first aspect of the present invention gives the following advantages:
(1) Since the image (of the television camera) rotated by 90° or the image not rotated by 90° is switched and outputted to the television monitor, the orientation of the picture plane can be changed in accordance with the installation condition of the television monitor; and
(2) Since the orientation of the image displayed on the television monitor can be changed freely, the degree of freedom of construction of the picture plane is enhanced. Accordingly, the optimum picture plane can be obtained in accordance with the installation condition of the television monitor, the number of cameras, the number of optical fibers to be photo-taken and/or splicing fashion of the optical fibers.

The image processor for observing an optical fiber according to a second aspect of the present invention gives the following advantage:
(1) Since there is provided the scan converting portion capable of switching and outputting the image (of the television camera) rotated by 90° or the image not rotated by 90° , the same effect as the above can be achieved with a simple construction.

The image processor for observing an optical fiber according to a third aspect of the present invention gives the following advantage:
(1) Since the rotation of the image is effected by the scan converting portion having the scan converting image memory portion in the hardware manner, high speed processing can easily be achieved.

The image processor for observing an optical fiber according to a fourth aspect of the present invention gives the following advantage:
(1) Since the rotation of the image is effected by the information processing processor and the software program in the software fashion, in dependence upon the software program, various processing functions can be added or altered. Accordingly, by re-writing the software program, new functions can always be proposed. Further, the image processing processor can perform formation of the graphic information and combination thereof, and, when the information processing processor having high processing ability is used, the circuits can be simplified and the cost of the image processor can be reduced.

The image processor for observing an optical fiber according to a fifth aspect of the present invention gives the following advantage:
(1) Since the longitudinal magnification, lateral magnification, longitudinal offset amount and lateral offset amount can be changed in the scan converting portion, the picture plane by which the operator can easily work can be obtained.

The image processor for observing an optical fiber according to a sixth aspect of the present invention gives the following advantage:
(1) Since the image signal obtained by combining the desired information with the image photo-taken by the television camera can be outputted to the television monitor, the information useful for the operator can be displayed. It is very convenient.

The image processor for observing an optical fiber according to a seventh aspect of the present invention gives the following advantage:
(1) Since the images photo-taken by two or more television cameras interconnected can be processed and be simultaneously monitored, high accurate image processing and observation can be achieved by a plurality of television cameras.

The optical fiber fusion-splicer according to an eighth aspect of the present invention gives the following advantages because the device has the image processor for observing an optical fiber according to the present invention providing the above-mentioned advantages:
(1) Since the orientation of the television monitor can freely be changed with respect to the main body, even if there is any obstacle or if the light directly illuminates the television monitor, the television monitor can be set at the best orientation most easy to observe. Further, by the combination of the scan converting function and the reverse display function, even when the television monitor is set at the best orientation most easy to observe, the image can always be opposed to the operator.
(2) Since the television monitor has the reverse display function, the degree of freedom of construction of the picture plane is further enhanced, and the image at the orientation most easy to observe for the operator can be provided in accordance with the orientation of the television monitor.
(3) Since the scan converted image and the non-scan converted image, (vertically reversed images thereof, laterally reversed images thereof and vertically/laterally reversed images thereof eight images in total) can freely be selected and displayed, the degree of freedom of construction of the picture plane is further enhanced.

The optical fiber fusion-splicer according to a ninth aspect of the present invention gives the following advantage:
(1) Since the picture plane of the television monitor can be changed automatically or manually in accordance with the orientation of the television monitor, the optimum image among the displayable images can always be displayed.

## Claims

1. An image processor for observing an optical fiber, in which information regarding optical fibers obtained by an image photo-taken by a television camera and by processing such an image can be outputted to a television monitor, the image processor being characterized in that:
an image obtained by rotating the image from said television camera by 90° and an image obtained by not rotating the image from said television camera can be switched and be outputted to said television monitor.

2. An image processor for observing an optical fiber according to claim 1, further comprising a scan converting portion capable of switching and outputting the image obtained by rotating the image from said television camera by 90° and the image obtained by not rotating the image from said television camera.

3. An image processor for observing an optical fiber according to claim 2, wherein said scan converting portion includes a scan converting image memory portion for storing the inputted image, and further wherein, by converting data read/write address in said scan converting image memory portion, the image rotated by 90° and the image not rotated by 90° are read from said scan converting image memory portion and are outputted.

4. An image processor for observing an optical fiber according to claim 1 or 2, wherein said scan converting portion includes an information processing processor such as a digital signal processor, and software program describing an information processing sequence of said information processing processor, and said information processing processor can rotate the image inputted to said scan converting portion by 90° and output it.

5. An image processor for observing an optical fiber according to any one of claims 2 to 4, wherein said scan converting portion has a function for altering one or more of longitudinal magnification, lateral magnification, a longitudinal offset amount and a lateral offset amount of the image.

6. An image processor for observing an optical fiber according to any one of claims 1 to 5, wherein a signal obtained by combining desired information with the image photo-taken by said television camera can be outputted to said television monitor.

7. An image processor for observing an optical fiber according to any one of claims 1 to 6, wherein image signals from two or more television cameras can be inputted, and the image signals from the respective television cameras can be combined on a single television monitor or be switched to be outputted to said television monitor.

8. An optical fiber fusion-splicer comprising:
a main body including a fusion-splicing mechanism for fusion-splicing two optical fibers; and
an image processor for observing an optical fiber according to any one of claims 1 to 7;
and wherein
orientation of said television monitor of said image processor can freely be changed with respect to said main body and said television monitor has a reverse display function.

9. An optical fiber fusion-splicer according to claim 8, wherein a picture plane of said television monitor can be changed manually or automatically in accordance with the orientation of said television monitor.
